# EUROPÄISCHE PATENTSCHRIFT

(11) **EP 0 810 936 B1**
(45) Veröffentlichungstag und Bekanntmachung des Hinweises auf die Patenterteilung: **10.04.2002**
(21) Anmeldenummer: 96945540.1
(22) Anmeldetag: 31.10.1996
(51) Int. Cl.: B60S 1/38

(54) **WISCHBLATT FÜR SCHEIBEN VON KRAFTFAHRZEUGEN**
WIPER BLADE ASSEMBLY FOR MOTOR VEHICLE WINDSCREENS
ENSEMBLE RACLETTE D'ESSUIE-GLACE POUR PARE-BRISE DE VEHICULE A MOTEUR

(30) Priorität: 12.12.1995 DE 19546256
(43) Veröffentlichungstag der Anmeldung: 10.12.1997
(73) Patentinhaber: ROBERT BOSCH GMBH, 70442 Stuttgart (DE)
(72) Erfinder: CRIEL, Paul, B-3800 St. Truiden (BE)
(86) Internationale Anmeldenummer: DE9602073
(87) Internationale Veröffentlichungsnummer: WO9721569

(56) Entgegenhaltungen:
- WO-A-95/23714
- DE-A- 1 942 345
- DE-A- 4 319 139
- DE-A- 4 320 637
- US-A- 3 094 734

## Beschreibung

### Stand der Technik

Die Erfindung geht aus von einem bekannten Wischblatt (DE-A 19 42 345), das seitliche Längsnuten zur Aufnahme von Versteifungsschienen aufweist, wobei die Längsnuten der Wischleiste in Längsrichtung zumindest an einigen Stellen die eingelegten Versteifungsschienen hintergreifen und diese an der Wischleiste festlegende Halteelemente tragen. Die Längskanäle sind seitlich oder unten geöffnet, um das Einschieben der Versteifungsschienen in die Wischleiste zu ermöglichen.

Es ist ferner ein Wischblatt bekannt (DE 4319139 A1), bei dem zur Verteilung der Anlegebelastung in der Kopfleiste als Federelemente eine einzige Federschiene angeordnet ist.

Wenn jedoch für die Wischleiste beispielsweise eine weiche Materialmischung vorgesehen werden muß, kann dies im Wischbetrieb, insbesondere beim Wischen über einen nicht ausreichend benetzte Scheibenoberfläche, zu einer unzulässig großen Verdrehung der Kopfleiste gegenüber den anderen Leistenbereichen führen, so daß die Streifleiste die Scheibenoberfläche berührt. Durch den damit verbundenen Anstieg der Reibung zwischen Scheibe und Wischleiste kann die Kopfleiste aus dem Traggestell gehebelt werden, so daß die Wischvorrichtung ihrer Aufgabe nicht mehr gerecht wird. Eine Verbreiterung der Federschiene kann diesen Mangel nicht ohne Nachteile beseitigen, weil durch die damit verbundene Erhöhung der Steifigkeit der Federschiene die Anpassung der Wischleiste an die stetig wechselnde Scheibenkontur beeinträchtigt werden könnte. Eine gleichzeitige Minderung der Federschienendicke würde die leichte Montierbarkeit der Federschiene in Frage stellen.

### Vorteile der Erfindung

Bei dem Wischblatt nach dem Oberbegriff des Anpruchs 1 dagegen sind die Federmittel durch mehrere - wenigstens zwei - in einer zur Wischebene zumindest annähernd parallelen Ebene und mit Abstand voneinander angeordnete, stangenartige Federelemente gebildet. Dadurch können diese stangenartigen Elemente je für sich in den von dem Traggestell umgriffenen LängsRandbereichen der Kopfleiste plaziert werden. Durch die damit verbundene Verstärkung wird die Gefahr des Aushebelns der Wischleiste aus dem Traggestell vermieden. Die zur Versteifung der Kopfleiste wirksame Gesamtbreite der beiden Federelemente kann den - hinsichtlich der Anpassung der Wischleiste an die Scheibenkontur - wichtigen Erfordernisssen leicht angepaßt werden.

Eine besonders einfache, gegebenenfalls sogar automatische Montage der Federelemente ergibt sich, wenn in dem erfindungsgemäßen Wischblatt die Elemente in rundum geschlossenen Längskanälen liegen, welche in der Kopfleiste vorgesehen sind und die an den beiden Stirnflächen der Kopfleiste münden.

Dazu hat es sich als zweckmäßig erwiesen, wenn die Federelemete im Querschnitt rechteckig ausgebildet sind. Es ergeben sich somit langgestreckte Blattfedern, die besonderes einfach, beispielsweise aus Federbandstahl hergestellt werden können.

Eine einfache Sicherung gegen Längsverschiebung der Federelemente in der Kopfleiste kann erreicht werden, wenn weiter die stangenartigen, langgestreckten Federelemente mit zumindest einer seitlichen Aussparung versehen sind, welche einer die Kopfleiste umgreifenden Haltekralle des Traggestells zugeordnet ist.

Um gleichzeitig auch eine Längsverschiebesicherung der Wischleiste gegenüber dem Traggestell zu erhalten, drückt in weiterer Ausgestaltung der Erfindung die Haltekralle des Traggestells den von ihr umgriffenen Bereich der die Wand des Längskanals bildenden Kopfleiste in die seitliche Aussparung der langgestreckten Feldermittel.

Weitere, vorteilhafte Ausgestaltungen und Verbesserungen der Erfindung sind aus der folgenden Beschreibung eines Ausführungsbeispiels der Erfindung zu entnehmen, welches in der zugehörigen Zeichnung dargestellt ist.

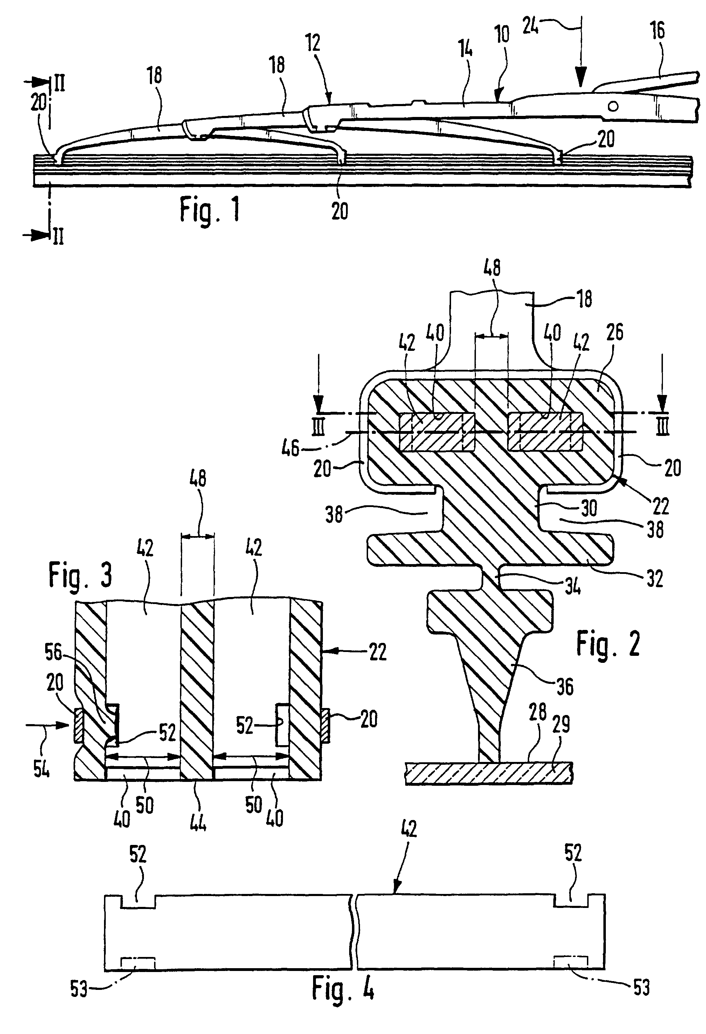

Zur näheren Erläuterung der Erfindung zeigen Figur 1 eine Teil-Seitenansicht eines Wischblatts, Figur 2 einen Schnitt durch das Wischblatt gemäß Figur 1, entlang der Linie II-II, in vergrößerter Darstellung, Figur 3 einen Schnitt durch die Anordnung gemäß Figur 2, entlang der Linie III-III, unmaßstäblich dargestellt und Figur 4 die unmaßstäbliche Darstellung eines zum Wischblatt gehörenden Federelements.

### Beschreibung des Ausführungsbeispiels

Ein in Figur 1 teilweise dargestelltes Wischblatt 10 weist in an sich bekannter Weise ein mehrgliedriges, langgestrecktes Traggestell 12 auf. Die Traggestellglieder sind beim Ausführungsbeispiel durch einen Hauptbügel 14 gebildet, der am freien Ende eines angetriebenen Wischarms 16 angelenkt ist. Zu dem Traggestell 12 gehören weiter sogenannte Unter- oder Krallenbügel 18, die gelenkig miteinander verbunden sind. Die Krallenbügelkonstruktion 18 ist ihrerseits ebenfalls gelenkig mit dem Hauptbügel 14 verbunden. Die Krallenbügel 18 fassen mit an ihren freien Enden angeordneten Haltekrallen 20 eine langgestreckte, elastische Wischleiste 22. Das Wischblatt 10 ist durch den Wischerarm 16 in Richtung des Pfeiles 24 (Figur 1) zur zuwischenden Scheibenoberfläche belastet. Während des Wischbetriebs wird das Wischblatt 10 quer zu seiner Längserstreckung über die Oberfläche 28 einer zu wischenden Scheibe 29 bewegt.

Der Aufbau der Wischleiste 22 ist insbesondere aus Figur 2 ersichtlich. Sie weist eine im Querschnitt rechteckige Kopfleiste 26 auf, die zur Scheibenoberfläche 28 in einer Einschnürung 30 übergeht. Mit Abstand von der Kopfleiste 26 schließt sich an die Einschnürung 30 eine Verbreiterung 32 an, welche auch als Streifleiste zu bezeichnen ist. Über einen schmalen Kippsteg 34 ist mit der Streifleiste 32 eine Wischlippenleiste 36 elastisch verbunden. Wie weiter aus Figur 2 ersichtlich ist, ergeben sich durch die eben beschriebene Ausgestaltung der Wischleiste zwischen der Kopfleiste 26 und der Streifleiste 32 zwei einander gegenüberliegende Längsnuten 38, welche den Haltekrallen 20 des Traggestells 12 ein sicheres Umfassen der Kopfleiste 26 ermöglichen. Schließlich zeigt Figur 2, daß innerhalb der Kopfleiste 26 zwei Längskanäle 40 angeordnet sind, welche zur Aufnahme von Federmitteln 42 dienen. Diese sind beim Ausführungsbeispiel durch zwei langgestreckte im Querschnitt rechteckige, stangenförmige, aus einem elastischen Material bestehende Federelemente gebildet sind. Diese können beispielsweise auch aus einem Federbandstahl hergestellt sein, so daß die Federmittel auch als Federschienen bezeichnet werden können. Figur 3 zeigt, daß die Längskanäle 40 an den beiden Stirnflächen 44 der Wischleiste 22 münden. Zwar ist in Figur 3 nur das eine Ende der Wischleiste dargestellt doch soll hier festgehalten werden, daß das andere Ende der Wischleiste 22 entsprechend ausgebildet ist.

Die Wischleiste selbst ist mittels eines Extrusionsverfahrens hergestellt, welches in der DE 4319139 A1 beschrieben ist. Auf diese Durchschrift wird hier ausdrücklich bezug genommmen, so daß die Offenbarung aus dieser Schrift zur weiteren Offenbarung der vorliegenden Patentanmeldung mit verwendet wird. Dieses Verfahren stellt sicher, daß die Wischleiste 22 über ihre gesamte Längserstreckung einen gleichbleibenden Querschnitt hat. Dies gilt auch für die beiden Längskanäle 40.

Die beide Längskanäle sind in der Kopfleiste 26 in einer Ebene angeordnet, welche zumindest annähernd parallel zur Wischebene verläuft. Die Wischebene ist in Figur 2 durch die Scheibenoberfläche 28 angedeutet, während die Anordnungsebene für die beiden Längskanäle 40 durch eine strichpunktierte Linie 46 dargestellt ist. Weiter zeigt Figur 2, daß die beiden Aufnahmekanäle 40 für die beiden Federschienen 42 mit Abstand 48 voneinander angeordnet sind. Dies hat den Vorteil, daß der Querschnitt der Federschienen 42 den eingangs schon erläuterten Erfordernissen angepaßt werden kann. Ein weiterer Vorteil dieser Ausgestaltung ist darin zu sehen, daß die Kanalbreite 50 (Figur 3) in einem Rahmen gehalten werden kann, welcher der Hohlraumextrusion, wie sie in der oben erwähnten Durchschrift angeboten wird, zugänglich ist. Weiter kann durch entsprechende Abstimmung des Abstandes 48 und der Breite der Längskanäle 50, welche auf die Breite der Federschienen 42 abgestimmt ist, die erforderliche Steifigkeit der Kopfleiste 26 den Erfordernissen angepaßt werden.

Figur 4 zeigt die Ausgestaltung einer Federschiene 42. Sie weist an ihren beiden Enden je eine seitliche Aussparung 52 auf, welche als Längsverschiebesicherung der Federschiene 42 in der Kopfleiste 26 dient. Aus Figur 3 ist entnehmbar, wie die in den Kanal 40 eingeschobene Federschiene 42 (rechte Federschiene) im Längskanal 40 liegt. Zur Sicherung der Federschiene 42 in dem Längskanal 40 wird nun die Haltekralle 20 in Richtung des Pfeiles 54 nach innen gedrückt (siehe linke Federschiene) so daß diese Haltekralle des Fahrgestells 12 den von ihr übergriffenen Bereich der Wand 56 des Längskanals 40 in die seitliche Aussparung 52 der Federschiene 42 drückt. Dadurch wird einmal eine Sicherung der Federschiene 42 in der Wischleiste 22 erreicht. Darüber hinaus ist aber auch sichergestellt, daß die Wischleiste 22 samt den in ihrer Kopfleiste 26 befindlichen Federschienen 42 unverlierbar mit dem Traggestell 12 des Wischblatts 10 verbunden ist. Dazu genügt es, wenn ein einziges Paar von Haltekrallen 20 in der beschriebenen Weise zusammen gedrückt wird (Pfeil 54) so daß jede Kralle einen entsprechenden Wandbereich in die Aussparung 52 jeder Federschiene 42 drückt.

Im Hinblick auf eine automatische Montage der Federschienen 42 in ihren Längskanälen 40 kann es von Vorteil sein, wenn jede Federschiene mit zwei einander gegenüberliegenden Aussparungen 52 versehen ist. Eine solche Ausgestaltung der Federschienen ist in Figur 4 durch die zusätzlich strichpunktiert angedeuteten Aussparungen 53 zeigt.

## Patentansprüche

1. Wischblatt (10) für Scheiben von Kraftfahrzeugen, mit einer langgestreckten Wischleiste (22), die von einem Traggestell (12) gehalten und zur zu wischenden Scheibe (28) belastet quer zu ihrer Längserstreckung über die Scheibe bewegbar ist, wobei im Querschnitt gesehen die Wischleiste (22) eine von dem Traggestell (12) gefaßte, langgestreckte Kopfleiste (26) und eine mit dieser verbundenen, langgestreckte Streifleiste (32) aufweist, an deren von der Kopfleiste (26) abgewandten Seite über einen langgestreckten Kippsteg (34) eine an der Scheibe anliegende, langgestreckte Wischlippenleiste (36) befestigt ist, wobei innerhalb der Kopfleiste (26) langgestreckte, aus einem elastischem Material bestehende Federmittel (42) zum Verteilen der Anlegebelastung (24) angeordnet sind, wobei die Federmittel durch wenigstens zwei in einer zur Wischebene (28) zumindest annähernd parallelen Ebene (46) und mit Abstand (48) von einander angeordnete, stangenartige Federelemente (42) gebildet sind, **dadurch gekennzeichnet, daß** die Federelemente (42) in rundum geschlossenen, in der Kopfleiste (26) vorgesehenen Längskanälen (40) liegen, die an den beiden Stirnflächen (44) der Kopfleiste (26) münden.

2. Wischblatt nach Anspruch 1, **dadurch gekennzeichnet, daß** die Federelemente (42) im Querschnitt rechteckig ausgebildet sind.

3. Wischblatt nach einem der Ansprüche 1 bis 2, **dadurch gekennzeichnet, daß** die stangenartigen, langgestreckten Federelemente (42) mit zumindest einer seitlichen Aussparung (52, 53) versehen sind, welche einer die Kopfleiste (26) umgreifenden Haltekralle (20) des Traggestells (12) zugeordnet ist.

4. Wischblatt nach Anspruch 3, **dadurch gekennzeichnet, daß** die Haltekralle (20) des Traggestells (12) den von ihr umgriffenen Bereich der die Wand (56) des Längskanals (40) bildenden Kopfleiste 26 in die seitliche Aussparung (52 bzw. 53) der langgestreckten Federmittel (42) drückt.

## Claims

1. Wiper blade (10) for shields of motor vehicles, with an elongate wiping strip (22) which is held by a carrying frame (12) and, loaded towards the shield (28) to be wiped, can be moved over the shield transversely to the longitudinal extent of said wiping strip, the wiping strip (22) having, as seen in cross section, an elongate head strip (26) grasped by the carrying frame (12) and an elongate brushing strip (32) which is connected to said head strip and to the side of which, facing away from the head strip (26), is fastened via an elongate tilting web (34) an elongate wiping-lip strip (36) which comes to bear against the shield, elongate spring means (42) which consist of an elastic material being arranged within the head strip (26) in order to distribute the bearing load (24), the spring means being formed by at least two rod-like spring elements (42) arranged at a distance (48) from one another in a plane (46) at least approximately parallel to the wiping plane (28), **characterized in that** the spring elements (42) lie in longitudinal ducts (40) which are closed all-round and are provided in the head strip (26) and which issue on the two end faces (44) of the head strip (26).

2. Wiper blade according to Claim 1, **characterized in that** the spring elements (42) are designed with a rectangular cross section.

3. Wiper blade according to one of Claims 1 and 2, **characterized in that** the rod-like elongate spring elements (42) are provided with at least one lateral recess (52, 53) which is assigned to a holding claw (20) of the carrying frame (12), said holding claw engaging around the head strip (26).

4. Wiper blade according to Claim 3, **characterized in that** the holding claw (20) of the carrying frame (12) presses into the lateral recess (52 or 53) of the elongate spring means (42) of that region of the head strip (26) forming the wall (56) of the longitudinal duct (40) around which said holding claw engages.

## Revendications

1. Balai d'essuie-glace (10) pour des vitres de véhicules automobiles comportant une raclette (22), allongée, tenue par un palonnier (12) et qui, chargée se déplace transversalement à son extension longitudinale sur la vitre (28) à essuyer,
la raclette (22) ayant, en section, une barrette de tête (26), allongée, prise par le palonnier (12) et une barrette de raclage (32), allongée, reliée à celle-ci, et sur le côté de cette dernière, à l'opposé de la barrette de tète (26), une lèvre d'essuyage (36), allongée, appliquée contre la vitre et
reliée à la barrette de raclage par une articulation (32), et la barrette de tête (26) comporte un moyen à ressort (42), allongé, en une matière élastique, pour répartir la charge d'application (24),
les moyens élastiques étant formés par au moins deux éléments de ressort (42) en forme de tiges, distants l'un de l'autre de la distance (48), situés dans un plan (46) sensiblement parallèle au plan d'essuyage (28),
**caractérisé en ce que**
les éléments à ressort (42) sont logés dans des canaux longitudinaux (40), fermés dans la direction périphérique, dans la barrette de tête (26), ces canaux longitudinaux débouchant aux deux surfaces frontales (44) de la barrette de tête (26).

2. Balai d'essuie-glace selon la revendication 1,
**caractérisé en ce que**
les éléments à ressort (42) ont une section rectangulaire.

3. Balai d'essuie-glace selon l'une quelconque des revendications 1 et 2,
**caractérisé en ce que**
les éléments à ressort (42), allongés, en forme de tiges, comportent au moins une découpe latérale (52, 53) à laquelle est associée une griffe de fixation (20) du palonnier (12) entourant la barrette de tête (26).

4. Balai d'essuie-glace selon la revendication 3,
**caractérisé en ce que**
la griffe de fixation (22) du palonnier (12) enfonce la zone qu'elle entoure de la barrette de tête (26) qui forme la paroi (56) du canal longitudinal (40) dans la découpe latérale (52, 53) de l'élément à ressort (42) allongé.
